(19) Europäisches Patentamt
European Patent Office
Office européen des brevets

(11) **EP 1 355 139 B1**

(12) **EUROPEAN PATENT SPECIFICATION**

(45) Date of publication and mention
of the grant of the patent:
**04.12.2013 Bulletin 2013/49**

(51) Int Cl.:
***G01M 1/24*** *(2006.01)*   ***G01M 1/22*** *(2006.01)*

(21) Application number: **03007719.2**

(22) Date of filing: **04.04.2003**

(54) **method and device for correcting an unbalance**

Methode und Gerät zur Unwuchtkorrektur

Procédé et dispositif de correction du balourd

(84) Designated Contracting States:
**AT BE BG CH CY CZ DE DK EE ES FI FR GB GR HU IE IT LI LU MC NL PT RO SE SI SK TR**

(30) Priority: **12.04.2002 JP 2002110735**

(43) Date of publication of application:
**22.10.2003 Bulletin 2003/43**

(73) Proprietor: **NAGAHAMA SEISAKUSHO LTD.**
**Takatsuki, Osaka (JP)**

(72) Inventors:
• **Hisamatsu, Masanori,**
c/o Nagahama Seisakusho Ltd.
Takatsuki,
Osaka (JP)
• **Hirano, Eiji,**
c/o Nagahama Seisakusho Ltd.
Takatsuki,
Osaka (JP)

(74) Representative: **Haar, Lucas Heinz Jörn et al**
**Patentanwälte Haar & Schwarz-Haar**
**Lessingstrasse 3**
**61231 Bad Nauheim (DE)**

(56) References cited:
**EP-A- 0 502 780      JP-A- 8 145 833**
**JP-A- 63 016 241    US-A- 4 300 387**
**US-A- 5 208 758      US-A- 5 502 650**

**Description**

The present invention relates to a method and a device for correcting an unbalance suitably usable for a high speed rotary apparatus, especially a small-sized turbo charger assembly.

Since a turbo charger is rotated at a high rotational speed above the primary resonance point and the secondary resonance point, each part constituting a rotor such as a turbine wheel or compressor wheel is balanced with a high accuracy as a single part. A method for effecting a measurement of the unbalance of a single small weight rotor body such as an impeller or a turbine wheel for a turbo-charger in an internal combustion engine is disclosed in US-A-4300387. According to this method a rotor body to be tested is mounted on a supporting shaft which is on both ends thereof supported on a pair of bearing units of a balance tester. The shaft is rotated under predetermined constant speed while transducers at the bearing units produce, at every angular position of the rotor, electrical signals corresponding to the unbalance of the rotor at the angular position. A control unit receiving the electrical signals indicates the unbalance for effecting a necessary correction.

However accurately each part of a turbo charger may be balanced, an assembled turbo charger assembly will have a new unbalance resulting from an unbalance caused by mutual fitting of the parts at the assembling time or an unbalance caused by unbalanced additional parts such as clamp nuts necessary for assembling the parts. Especially, since recent turbo chargers have become small-sized and high speed ones, an unbalance in an assembled turbo charger assembly cannot be neglected. Therefore, correction of an unbalance in an assembled turbo charger assembly is substantially indispensable.

EP-A-0502780 discloses a method for balancing dynamically a rotor of a rotary machine which rotor comprises a shaft having at least one seating on which at least one functional element is disposed. The method comprises the steps of balancing dynamically the rotor alone for determining a residual unbalance of the rotor, characterizing the eccentricity of the at least one seating by amplitude and angular position in relation to a defined mark for determining an unbalance for mounting of the functional element, balancing dynamically said functional element before mounting it on the shaft of the rotor for determining a residual unbalance of the functional element, disposing angularly the functional element on the seating of the shaft such that the imbalances of the rotor and the functional element are at least partially neutralized and completing balancing by means of a prior defined balancing mass for minimizing the resultant unbalance.

US-A-5 208 758 discloses a method and apparatus for correcting the unbalance of a rotatable object according to the preambles of claims 1 and 2, wherein the apparatus learns from past errors and automatically adjusts to improve future unbalance corrections of the object. The object is rotated a first time and the amount of angular location of unbalance is detected and recorded. The object is then corrected for this measured unbalance and the corrected object is rotated again. The amount and angle of any remaining unbalance is detected. Then the first detected unbalance is combined with the unbalance detected in the corrected object to obtain a correction unbalance amount which can be used when later correcting that object. In contrast to the claimed invention the correction amount is obtained by calculating the magnitude difference between the effective unbalance correction amount and the initial unbalance amount.

Balancing of a turbo charger assembly is carried out by a method in which an assembled rotor is rotated at a rotational speed not causing deflection or a method in which an assembled rotor is rotated at a rotational speed above the primary resonance point. In the latter method, there is a problem that, even if an unbalance in a turbo charger assembly is accurately measured and the unbalance is corrected based on the measured value, the difference between the measured unbalance value and the practically corrected value changes with each turbo charger assembly of which unbalance is to be corrected under the influence of the bending strength, bearing characteristics and the like of the assembled rotor and therefore highly accurate unbalance correction cannot be achieved.

An object of the present invention is to solve the above-mentioned problem. That is, an object of the present invention is to provide a method and a device for highly accurately correcting an unbalance suitably usable for a high speed rotary apparatus, especially a small-sized turbo charger assembly.

According to the invention the object is solved by the method defined in claim 1 and by the device defined in claim 2.

Function and effect and an embodiment of the present invention will concretely be described with reference to the appended drawings.

Fig. 1 illustrates the principle of the present invention.

Fig. 2 shows the schematic configuration of a dynamic balancing testing machine according to an embodiment of the present invention.

Fig. 3 is a block diagram of an electric circuit of the dynamic balancing testing machine according to an embodiment of the present invention.

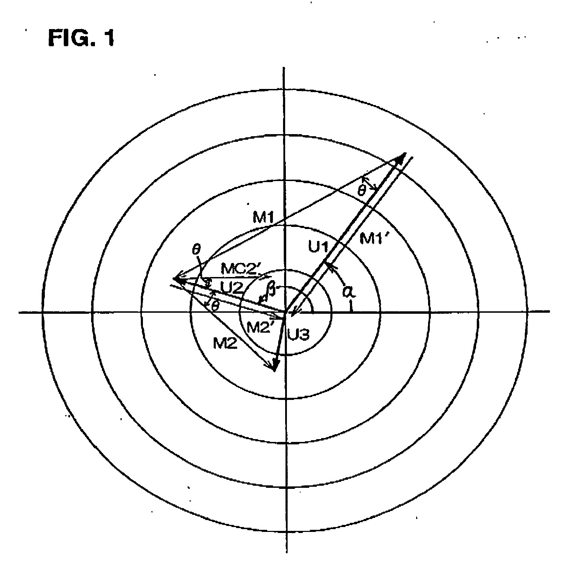

In Fig. 1, U1 indicates, in the form of a vector, an initial unbalance of a test unit measured by a first measurement step. That is, U1 represents the amount |U1| and the reference polar angle a of the initial unbalance. (Hereinafter in this description, the unbalance amount and the correction amount will be all represented as vectors respectively.) The unbalance U1 is corrected based on a measurement data obtained by adjusting the calibration and the like using a reference turbo charger assembly, which has been additionally worked so as to be fitted with trial weights. If the characteristics of the test unit are completely the same as the characteristics of the reference turbo charger assembly, the correction vector ought to be M1'=-U1 and is calculated by inverting the reference polar angle $\alpha$ of the initial unbalance vector U1 by 180°. However, when correction is carried out in practice and the residual unbalance in the test unit after the correction is measured, the residual unbalance is not zero but is U2 having the amount |U2| and the reference polar angle p. In other words, correcting by the correction vector M1 has been carried out in practice with respect to the test unit, and it can be calculated that an unbalance correction Vector M1 has been effected having the amount |M1| and the angle difference $\theta$ with respect to the measured unbalance Vector U1.

Then, it can be predicted that, when correcting by the correction vector M2', which is the inversion -U2 of the residual unbalance U2, is carried out in order to eliminate the residual unbalance U2, an unbalance U3 will remain after the correction. Therefore, according to the present invention, a ratio of the initial unbalance U1 measured in the first measurement step to the correction vector M1 practically corrected in the first correcting step has been calculated, namely, a corrected correction vector MC2' which has been revised in reference polar angle and amount by the calculation of the angle 180°+$\beta$ plus the angle difference $\theta$ between U1 and M1 and the amount |MC2'| according to the formula

$$|MC2'| = |U2| \times (|M1'| / |M1|).$$

Then the unbalance is corrected by the revised correction amount |MC2'| and the reference polar angle 180°+$\beta$+$\theta$ so that the residual unbalance after the correction can be infinitely close to zero.

In other words, according to the present invention, for each test unit of which unbalance is to be corrected, the unbalance amount changed by the first correction and the unbalance amount measured in the first measurement (the initial unbalance) are compared with each other, and the deviation of the unbalance correction angle and the deviation of the unbalance correction amount are calculated, so that the second correction amount to be applied to the test unit is revised.

Even if each test unit (turbo charger assembly) of which unbalance is to be corrected has different characteristics, the unbalance of each test unit can be corrected with an extremely high accuracy, because the first effective unbalance correction amount M1 of a test unit is used for revising the second unbalance correction amount MC2' of the same test unit so that unbalance correction is carried out two times.

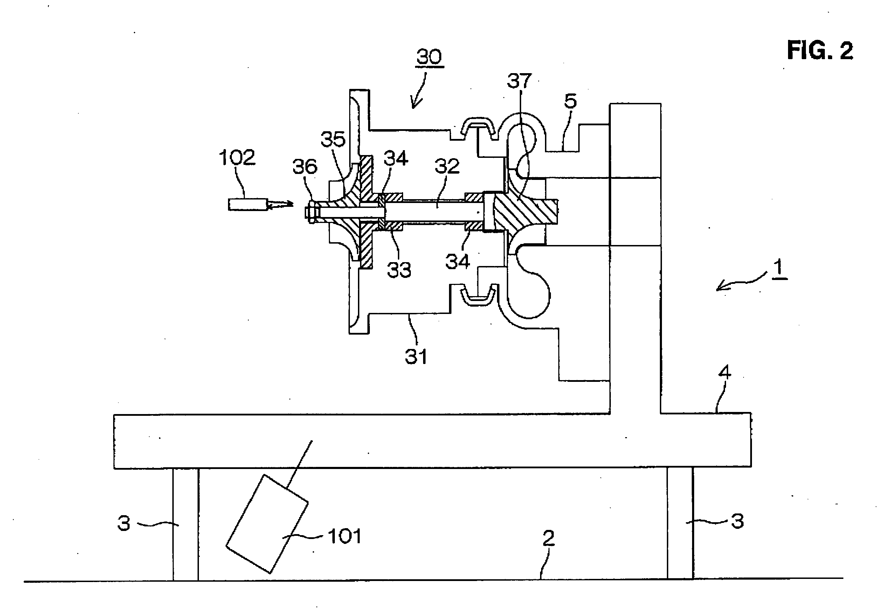

Fig. 2 is a view showing the schematic configuration of a dynamic balancing testing machine 1 for measuring an unbalance in a turbo charge assembly. The dynamic balancing testing device 1 has a vibration frame 4 held on a base 2 by a plurality of springs 3. The vibration frame 4 is provided with a drive housing 5 onto which a test unit (turbo charger assembly 30 of which unbalance is to be measured) is mounted. The turbo charger assembly 30 is mounted onto the drive housing 5 and rotated at a high speed. The rotation angle position of the turbo charger assembly 30 is detected by a reference angle detector 102. Further, vibration of the vibration frame 4 caused by the high speed rotation of the turbo charger assembly 30 is detected by an unbalance detector 101.

The turbo charger assembly 30 has, for example, the following structure. A shaft 32 is inserted into a bearing housing 31 that constitutes the main appearance of the assembly 30. The shaft 32 is rotatably held by radial bearings 33, 34 at two positions in the axial direction thereof. Further, an impeller 35 is mounted, through a thrust bearing 34, on the left side of the shaft 32. The impeller 35 is fixed to the shaft 32 with an impeller nut 36. A turbine wheel 37 is fitted to the right side of the shaft 32. Pressure air is supplied from the drive housing 5 to the turbine wheel 37 and thereby the turbo charger assembly 30 having the above-mentioned structure is rotated at a high speed, so that a dynamic balancing test is carried out.

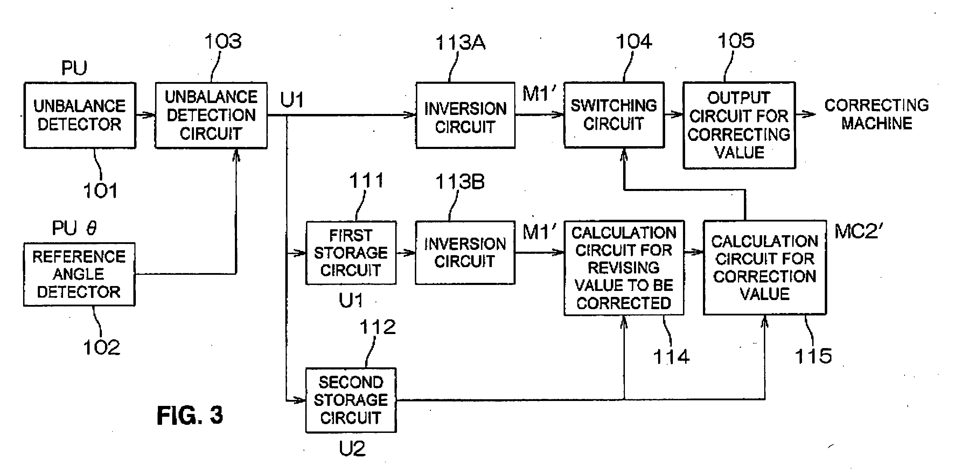

Fig. 3 is a block diagram of an electric circuit included in the dynamic balancing testing machine 1 shown in Fig. 2. A generation process of signals applied to a correcting machine (not shown) from the dynamic balancing testing machine 1 will be described in the following with reference to Fig. 3.

First, an unbalance vibration detected by the unbalance detector 101 and a reference angle signal of the test unit 30 detected by the reference angle detector 102 are inputted into an unbalance detection circuit 103. Based on these inputted signals, the unbalance detection circuit 103 outputs an unbalance angle and amount U1 (or two component force signals). The output U1 from the unbalance detection circuit 103 is inputted into an output circuit 105 for correcting value via an inversion circuit 113A inverting an angle by 180 degrees and a switching circuit 104.

At the same time, the output from the unbalance detection circuit 103 is inputted into a first storage circuit 111 to be stored.

The switching circuit 104 is provided for switching an output from the inversion circuit 113A inverting an output from the unbalance detection circuit 103 by 180 degrees or an output from a calculation circuit 115 for correction value, and inputting the output into the output circuit 105. That is, an output from the unbalance detection circuit 103 is inputted into the output circuit 105 for correcting value in the first measurement step, and an output from the calculation circuit 115 is inputted into the output circuit 105 in the second measurement step.

The unbalance angle and amount inputted into the output circuit 105 is converted into a signal in accordance with a correction tool in this circuit and outputted to a correcting machine. When the correction tool is, for example, a drill, the unbalance angle and amount is converted into a signal for positioning the angle position of the test unit 30 at an angle position opposed to the drill and a signal relating to a correcting depth of the drill in which the effect of the apical angle of the drill is revised, and these signals are outputted to the correcting machine. As the result, the first correction is carried out by the correcting machine.

The second measurement is carried out with respect to the test unit 30 of which unbalance has been corrected by the first correction. The second measurement is also carried out by using the dynamic balancing testing machine 1. An output signal from the unbalance detector 101 and an output signal from the reference angle detector 102 obtained by the second measurement are inputted into the unbalance detection circuit 103. Based on the input signal, the unbalance detection circuit 103 outputs an unbalance angle and amount U2 and this output U2 is inputted into a second storage circuit 112. And the output U2 is inputted into a calculation circuit 114 for revising value to be corrected and the calculation circuit 115 for corrected value.

On the other hand, the output U1 stored in the first storage circuit 111 in the first measurement step is inputted into an inversion circuit 113B. In the inversion circuit 113B, the signal U1 is converted into a signal M1' indicating an unbalance angle and amount in which the angle of U1 is inverted by 180 degrees. And this signal M1' is inputted into the calculation circuit 114.

The two signals inputted into the calculation circuit 114 are calculated. At that time, since the second measurement value is obtained as a result of the first correction based on the first measurement value, the effect of the first correction is calculated and the corrected revise value is calculated using the change of angle and amount of the effect as a revision coefficient.

Then, the corrected revise value calculated in the calculation circuit 114 is inputted into the calculation circuit 115.

The second measurement value U2 stored in the second storage circuit 112 is inputted into the calculation circuit 115 and then multiplied by the corrected revise value calculated in the corrected revise value calculation circuit, and outputted. This output M2' is inputted, via the switching circuit 104, into the corrected amount output circuit.

The unbalance angle and amount inputted into the output circuit 105 is converted there into a signal in accordance with the correction tool and given to the correcting machine (not shown). Then, the second correction is carried out by the correcting machine.

In the above-mentioned description, the output, input and calculation of each circuit are treated as vectors each comprising an angle and amount. However, they can be also calculated as component forces.

The present invention is not limited to the above-mentioned embodiment but may be variously changed within the scope of the appended claims.

Description of Reference Numerals

| | |
|---|---|
| 1 | dynamic balancing testing machine |
| 4 | vibration frame |
| 5 | drive housing |
| 30 | turbo charger assembly |
| 101 | unbalance detector |
| 102 | reference angle detector |
| 103 | unbalance detection circuit |
| 104 | switching circuit |
| 105 | output circuit for correcting value |
| 111 | first storage circuit |
| 112 | second storage circuit |
| 113a | inversion circuit |
| 113B | inversion circuit |
| 114 | calculation circuit for revising value to be corrected |
| 115 | calculation circuit for correction value |

**Claims**

**1.** A method for correcting an unbalance in a high speed rotary apparatus, the method comprising the steps of:

providing a test unit (30) wich unbalance to be corrected; then

measuring the amount and the reference polar angle $\alpha$ of an initial unbalance vector U1 in the test unit (30), the amount and angle being measured in a planar polar coordinate system centered at the rotational axis of the rotary apparatus, whereby the initial unbalance vector U1 = (|U1| ; $\alpha$) originates in the center of the coordinate system; then

calculating an unbalance correction vector M1'=-U1 by inverting the angle $\alpha$ of the initial unbalance vector U1 by 180 and using |M1'| = |U1|, and correcting the initial unbalance vector U1 by using the unbalance correction vector M1' for effecting an unbalance correction of the test unit (30); then

measuring the amount |U2| and the reference polar angle 3 of a residual unbalance vector U2=(|U2|;$\beta$) in the test unit (30) of which the initial unbalance vector U1 has been corrected in the first correcting step; then

calculating an effective unbalance correction vector M1=U2-U1, M1 having an effective unbalance correction amount |M1|; then

determining the angle difference ($\theta$) between the vectors M1' and M1; then

calculating the angle and amount of a revised correction vector MC2', having the angle 180°+$\beta$+$\theta$ and amount |MC2'| = |UZ|*|M1'|/|M1|, and then

correcting the residual unbalance vector U2 by using the revised correction vector MC2' for unbalance correction of the test unit (30).

2. A device for correcting an unbalance in a high speed rotary apparatus, the device comprising:

a vibration frame (4) held on a base (2) by a plurality of springs (3) and having a drive housing (5) onto which a test unit (30), of which unbalance is to be measured and corrected, is mounted:

an unbalance correcting machine; and

means for carrying out the method according to claim 1; and

output means for converting correction vectors M1', MC2' into a signal to be outputted to the unbalance correcting machine.

## Patentansprüche

1. Verfahren zum Unwuchtausgleich an einem Hochgeschwindigkeitsrotor, mit folgenden Schritten:

Bereitstellen eines Prüfaggregats (30) zum Ausgleichen einer Unwucht; danach

Messen von Größe und Bezugspolarwinkel $\alpha$ eines Ausgangsunwuchtvektors U1 in dem Prüfaggregat (30), wobei Größe und Winkel in einem ebenen Polarkoordinatensystem gemessen werden, das seinen Mittel-punkt auf der Drehachse des Rotors hat, wobei der Ausgangsunwuchtvektor U1 = (| U1 |; $\alpha$) vom Zentrum des Koordinatensystems ausgeht; danach

Berechnen eines Unwuchtausgleichsvektors M1' = - U1 durch Drehen des Winkels $\alpha$ des Ausgangsunwucht-vektors U1 um 180° und unter Anwendung von | M1' | = | U1 |, und Korrektur des Ausgangsunwuchtvektors U1 unter Anwendung des Unwuchtausgleichsvektors M1' zur Durchführung eines Unwuchtausgleichs des Prüfaggregats (30); danach

Messen von Größe | U2 | und Bezugspolarwinkel $\beta$ eines Restunwuchtvektors U2 = (| U2 |; $\beta$) in dem Prüfaggregat (30), bei dem der Ausgangsunwuchtvektor U1 im ersten Ausgleichsschritt korrigiert worden ist; danach

Berechnen eines tatsächlichen Unwuchtausgleichsvektors M1 = U2 - U1, wobei M1 eine tatsächliche Unwuchtausgleichsgröße | M1 | aufweist; danach

Ermitteln der Winkeldifferenz ($\theta$) zwischen den Vektoren M1' und M1; danach

Berechnen von Winkel und Größe eines korrigierten Ausgleichsvektors MC2', der den Winkel 180° + $\beta$ + $\theta$ und die Größe | MC2' | = | U2 | * | M1' | / | M1 | aufweist, und danach

Korrektur des Restunwuchtvektors U2 unter Anwendung des korrigierten Ausgleichsvektors MC2' zum Ausgleichen der Unwucht des Prüfaggregats (30).

2. Vorrichtung zum Unwuchtausgleich an einem Hochgeschwindigkeitsrotor, umfassend:

einen über eine Vielzahl von Federn (3) an einem Grundkörper (2) gelagerten Schwingrahmen (4) mit einem Antriebsgehäuse (5), auf dem ein Prilfaggregat (30) zum Messen und Ausgleichen einer Unwucht befestigt ist; eine Auswuchtmaschine; und

Mittel zur Durchführung des Verfahrens nach Anspruch 1; und

Ausgabemittel zur Umwandlung der Ausgleichsvektoren M1', MC2' in ein Signal zur Weiterleitung an die Auswuchtmaschine.

**Revendications**

1. Procédé de correction d'un déséquilibre dans un appareil rotatif à haute vitesse, le procédé comprenant les étapes suivantes :

mise à disposition d'un appareil à tester (30) présentant un déséquilibre devant être corrigé ; puis

mesure de la grandeur et de l'angle polaire de référence $\alpha$ d'un vecteur de déséquilibre initial U1 dans l'appareil à tester (30), la grandeur et l'angle étant mesurés dans un système de coordonnées polaire plan centré sur l'axe de rotation de l'appareil rotatif, le vecteur de déséquilibre initial U1 = ($|$U1$|$ ; $\alpha$) ayant pour origine le centre du système de coordonnées ; puis

calcul d'un vecteur de correction de déséquilibre M1' = -U1 en inversant l'angle $\alpha$ du vecteur de déséquilibre initial U1 de 180° et en utilisant $|$M1'$|$ = $|$U1$|$, et en corrigeant le vecteur de déséquilibre initial U1 en utilisant le vecteur de correction de déséquilibre M1' pour effectuer une correction du déséquilibre de l'appareil à tester (30) ; puis

mesure de la grandeur $|$U2$|$ et de l'angle polaire de référence $\beta$ d'un vecteur de déséquilibre résiduel U2 = ($|$U2$|$ ; $\beta$) dans l'appareil à tester (30) dont le vecteur de déséquilibre initial U1 a été corrigé au cours de la première étape de correction ; puis

calcul d'un vecteur de correction de déséquilibre effectif M1 = U2 - U1, M1 ayant une grandeur de correction de déséquilibre effective $|$M1$|$ ; puis

détermination de la différence d'angle (0) entre les vecteurs M1' et M1 ; puis

calcul de l'angle et de la grandeur d'un vecteur de correction révisé MC2', ayant l'angle 180° + $\beta$ + $\theta$ et la grandeur $|$MC2'$|$ = $|$U2$|$ * $|$M1'$|$/$|$M1$|$, puis

correction du vecteur de déséquilibre résiduel U2 en utilisant le vecteur de correction révisé MC2' pour la correction du déséquilibre de l'appareil à tester (30).

2. Dispositif pour corriger un déséquilibre dans un appareil rotatif à haute vitesse, ce dispositif comprenant :

un carter de vibration (4) retenu sur un socle (2) par une pluralité de ressorts (3) et possédant un boîtier d'entraînement (5) sur lequel est monté un appareil à tester (30) dont le déséquilibre doit être mesuré et corrigé ;

une machine de correction de déséquilibre ; et

des moyens pour mettre en oeuvre le procédé selon la revendication 1 ; et

des moyens de sortie pour convertir les vecteurs de correction M1', MC2' en un signal devant être envoyé à la machine de correction de déséquilibre.

# FIG. 1

**FIG. 2**

**FIG. 3**

PU
UNBALANCE
DETECTOR
101

UNBALANCE
DETECTION
CIRCUIT
103

U1

INVERSION
CIRCUIT
113A

M1'

SWITCHING
CIRCUIT
104

OUTPUT
CIRCUIT FOR
CORRECTING
VALUE
105

CORRECTING
MACHINE

PU θ
REFERENCE
ANGLE
DETECTOR
102

FIRST
STORAGE
CIRCUIT
111

U1

INVERSION
CIRCUIT
113B

M1'

CALCULATION
CIRCUIT FOR
REVISING
VALUE TO BE
CORRECTED
114

CALCULATION
CIRCUIT FOR
CORRECTION
VALUE
115

MC2'

SECOND
STORAGE
CIRCUIT
112

U2

EP 1 355 139 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4300387 A
- EP 0502780 A
- US 5208758 A